Europäisches Patentamt

European Patent Office

Office européen des brevets

(19)

(11) Veröffentlichungsnummer : **0 128 312**
**B1**

(12) **EUROPÄISCHE PATENTSCHRIFT**

(45) Veröffentlichungstag der Patentschrift :
23.11.89

(21) Anmeldenummer : 84104728.5

(22) Anmeldetag : 27.04.84

(51) Int. Cl.⁴ : **G 02 B 23/16**

(54) An einem Fahrzeug, insbesondere Kraftfahrzeug, angeordnete Beobachtungseinrichtung.

(30) Priorität : 10.05.83 DE 3317003

(43) Veröffentlichungstag der Anmeldung :
19.12.84 Patentblatt 84/51

(45) Bekanntmachung des Hinweises auf die Patenterteilung : 23.11.89 Patentblatt 89/47

(84) Benannte Vertragsstaaten :
BE DE FR GB NL

(56) Entgegenhaltungen :
DE–A– 2 033 589
DE–A– 2 713 619
DE–B– 2 710 738
GB–A– 2 074 129
US–A– 3 813 536

(73) Patentinhaber : Wegmann & Co. GmbH
August-Bode-Strasse 1
D-3500 Kassel (DE)

(72) Erfinder : Kratzenberg, Wolfgang, Dipl.-Ing.
Kaufungerwaldstrasse 9
D-3513 Staufenberg (DE)

(74) Vertreter : Feder, Heinz, Dr. et al
Dominikanerstrasse 37
D-4000 Düsseldorf 11 (DE)

Jouve, 18, rue St-Denis, 75001 Paris, France

## Beschreibung

Die Erfindung betrifft eine an einem Fahrzeug, insbesondere Kraftfahrzeug, angeordnete Beobachtungseinrichtung, mit einem durch eine Öffnung im Fahrzeugdach ausfahrbaren Teleskopmast, an dessen oberem Ende eine Beobachtungsgeräte tragende Plattform schwenkbar angeordnet ist.

Bei derartigen Beobachtungseinrichtungen (wie sie beispielsweise aus US-A-3.813.536 oder aus GB-A-2.074.129 bekannt sind), die sowohl für zivile als auch für militärische Zwecke einsetzbar sind und bei denen die Plattform mit verschiedenartigsten Beobachtungsgeräten, wie Fernrohren, Kameras, Fernsehkameras, Infrarotkameras, Richtmikrofonen usw., ausgerüstet sein kann, ergibt sich häufig die Schwierigkeit, daß das Fahrzeug bei ausgefahrenem Teleskopmast im Gelände weiterbewegt werden soll, wobei aufgrund der Unebenheiten im Gelände der Teleskopmast sehr unterschiedliche Stellungen zur Vertikalen einnehmen kann, wodurch die Manövrierfähigkeit des Fahrzeuges stark behindert werden kann. So kann es beispielsweise geschehen, daß, wenn sich das Fahrzeug in relativ unwegsamem Gelände innerhalb eines Waldes weiterbewegt, der Teleskopmast infolge der geländebedingten Schräglagen an den Zweigen hängenbleibt und so die Manövrierfähigkeit des Fahrzeuges behindert oder eingefahren werden muß.

Die der Erfindung zugrunde liegende Aufgabe bestand darin, eine Beobachtungseinrichtung der oben angegebenen Art so auszubilden, daß der Teleskopmast, unabhängig von der Stellung des Fahrzeuges im Gelände, auf die Vertikale stabilisiert wird.

Die Lösung dieser Aufgabe erfolgt erfindungsgemäß mit den im kennzeichnenden Teil des Patentanspruchs angegebenen Merkmalen.

Mit der erfindungsgemäßen Einrichtung ist es möglich, bei ausgefahrenem Teleskopmast das Fahrzeug im Gelände weiterzubewegen, wobei der Teleskopmast stets vertikal ausgerichtet bleibt und somit die Manövrierfähigkeit des Fahrzeuges in unwegsamem Gelände beträchtlich erweitert wird.

Die erfindungsgemäße Einrichtung hat den weiteren Vorteil, daß es möglich ist, über die Stabilisierung der Plattform die Beobachtungsgeräte selbst zu stabilisieren. Insbesondere bei langbrennweitigen Beobachtungsgeräten kann dann während der Bewegung des Fahrzeuges beobachtet werden, weil die Stabilisierung sicherstellt, daß keine Winkelbewegungen eintreten und Transversalbewegungen bei großen Entfernungen der zu beobachtenden Objekte vernachlässigbar sind.

Die Verbindung des Teleskopmastes in der Nähe seines unteren Endes mit dem Fahrzeug kann beispielsweise über ein Kugelgelenk oder eine kardanische Aufhängung erfolgen. Als Winkelgeber können an sich bekannte Inklinometer oder Kreisel verwendet werden. Die Stellglieder können ebenfalls in bekannter Weise, beispielsweise als Druckzylinder, Spindeln oder Linearmotore, ausgebildet sein.

Im folgenden wird anhand der beigefügten Zeichnungen ein Ausführungsbeispiel für eine Beobachtungseinrichtung nach der Erfindung näher erläutert.

In den Zeichnungen zeigen :

Fig. 1 in perspektivischer Darstellung ein Kraftfahrzeug mit einer Beobachtungseinrichtung nach der Erfindung ;

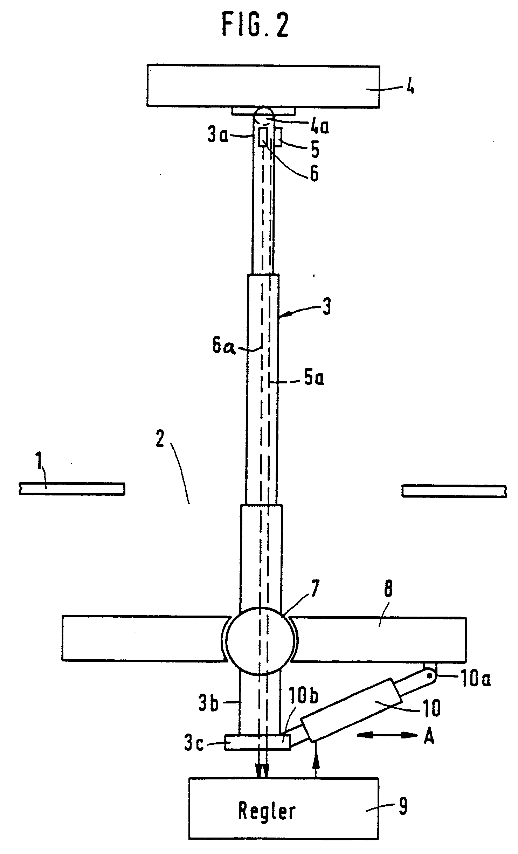

Fig. 2 in schematischer vergrößerter Darstellung die am Kraftfahrzeug gemäß Fig. 1 angeordnete Beobachtungseinrichtung in einer teilweise geschnittenen Seitenansicht ;

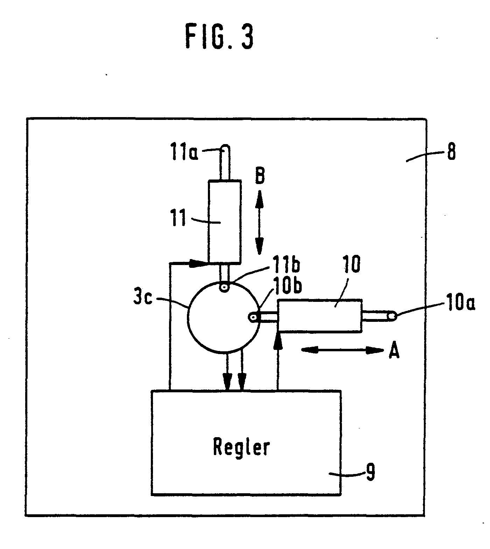

Fig. 3 die Beobachtungseinrichtung nach Fig. 2 in einer Ansicht von unten.

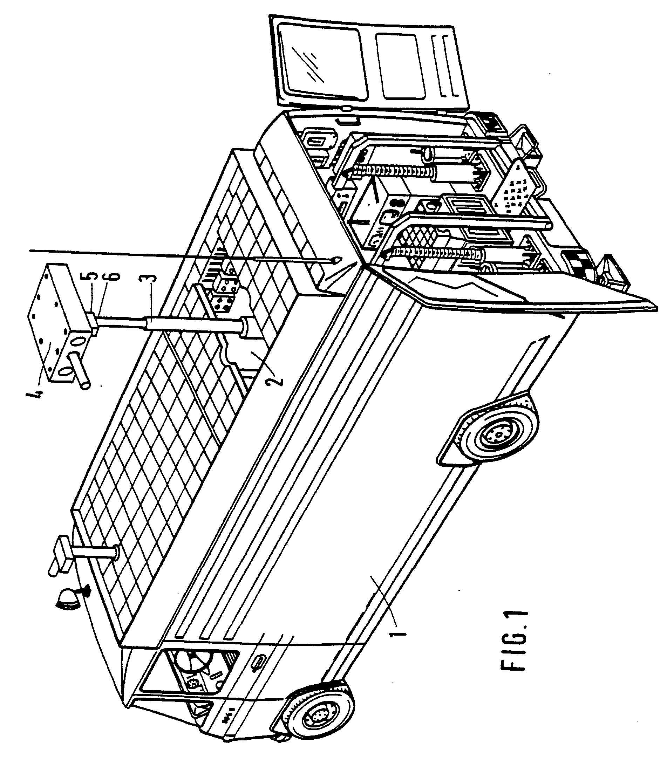

Wie Fig. 1 zu entnehmen, ist an einem Kraftfahrzeug 1 eine Beobachtungseinrichtung angeordnet, die einen durch eine Öffnung 2 im Dach des Kraftfahrzeuges 1 ausfahrbaren Teleskopmast 3 aufweist, an dessen oberem Ende eine Sensorplattform 4 schwenkbar angeordnet ist, in der nicht im einzelnen beschriebene übliche Beobachtungsgeräte, wie beispielsweise Fernsehkameras, Infrarotkameras und Richtmikrofone, angeordnet sind.

Die Sensorplattform 4 ist mit dem Teleskopmast 3 über eine entsprechende Schwenkverbindung 4a so schwenkbar verbunden, daß sie feingerichtet werden kann.

Der Teleskopmast 3 ist in der Nähe seines unteren Endes 3b über ein Kugelgelenk 7 mit einer mit dem Kraftfahrzeug 1 fest verbundenen Halterungsplatte 8 verbunden. Auf diese Weise ist der Teleskopmast 3 in allen senkrecht zum Fahrzeugboden stehenden Ebenen verschwenkbar. Am oberen Ende 3a des Teleskopmastes 3 sind dicht unterhalb des Sensorplattform 4 zwei Winkelgeber 5 und 6, beispielsweise Inklinometer, angeordnet, und zwar in zwei durch die Achse des Teleskopmastes 3 gehenden, senkrecht aufeinander stehenden Ebenen. Die Winkelgeber 5 und 6 messen den Winkel, den die Achse des Teleskopmastes 3 gegenüber der Vertikalen einnimmt und erzeugen entsprechende elektrische Signale, welche über angedeutete Leitungen 5a und 6a einem Regler 9 zugeführt werden, der, wenn die Winkelstellung des Teleskopmastes 3 von der Vertikalen abweicht, entsprechende Korrektursignale an zwei Stellglieder 10 und 11 abgibt. Die Stellglieder 10 und 11 sind unterhalb der Halterungsplatte 8 angeordnet und jeweils über bewegliche Verbindungen 10a bzw. 11a mit der Halterungsplatte 8 und Verbindungen 10b bzw. 11b mit einer Halterung 3c am Fußpunkt des Teleskopmastes 3 verbunden. Die Stellglieder 10 und 11 sind in den gleichen Ebenen angeordnet wie die Winkelgeber 5 und 6 und wirken demnach in zwei zueinander senkrechten Richtungen A und B. Der Teleskopmast 3 ist somit über die Stellglieder 10 und 11 in Abhängigkeit von den

vom Regler 9 gelieferten Signalen um die Aufhängung 7 so verschwenkbar, daß er unabhängig von der Stellung des Fahrzeuges 1 auf die Vertikale stabilisiert wird.

**Patentanspruch**

An einem Fahrzeug, insbesondere Kraftfahrzeug, angeordnete Beobachtungseinrichtung mit einem durch eine Öffnung im Fahrzeugdach ausfahrbaren Teleskopmast, an dessen oberem Ende eine Beobachtungsgeräte tragende Plattform schwenkbar angeordnet ist, dadurch gekennzeichnet, daß der Teleskopmast (3) in der Nähe seines unteren Endes (3b) über eine Bewegungen in zwei zueinander senkrecht stehenden, vertikalen Ebenen zulassende Aufhängung (7, 8) mit dem Fahrzeug (1) verbunden ist und daß eine den Teleskopmast (3) unabhängig von der Stellung des Fahrzeuges (1) auf die Vertikale ausrichtende Stabilisierungseinrichtung vorgesehen ist mit zwei in der Nähe des oberen Endes (3a) des Teleskopmastes (3) angeordneten, die in zwei zueinander senkrecht stehenden vertikalen Ebenen auftretenden Winkeldifferenzen zwischen der Richtung des Teleskopmastes (3) und der Vertikalen messenden und in elektrische Signale umwandelnden Winkelgebern (5, 6), die über einen Regelkreis (9) mit zwei am unteren Ende (3c) des Teleskopmastes (3) angreifenden in diesen vertikalen Ebenen wirksamen Stellgliedern (10, 11) verbunden sind.

**Claim**

Observation arrangement mounted on a vehicle, especially on a motor vehicle, which observation arrangement has a telescope mast extendable through an opening in the vehicle roof, on the upper end of which mast is mounted so as to pivot a platform supporting observation devices, characterized in that the telescope mast (3) is connected in the vicinity of its lower end (3b) to the vehicle (1) by means of a suspension (7, 8) allowing movement in two vertical planes lying perpendicular to one another and that a stabilizing arrangement, which orients the telescope mast (3) to the vertical irrespective of the position of the vehicle (1), is provided with two goniometers (5, 6), arranged in the vicinity of the upper end (3a) of the telescope mast (3) and measuring angular differences between the direction of the telescope mast (3) and the vertical direction occurring in two vertical planes lying perpendicular to one another and converting them into electrical signals, which goniometers (5, 6) are connected via a control unit (9) to two control elements (10, 11) effective in these vertical planes and acting on the lower end (3c) of the telescope mast (3).

**Revendication**

Dispositif d'observation aménagé sur un véhicule, en particulier sur un véhicule à moteur, comportant un mât télescopique pouvant être déployé à travers une ouverture prévue dans la toiture du véhicule, à l'extrémité supérieure duquel se trouve une plate-forme pivotante portant les appareils d'observation, caractérisé par le fait que le mât télescopique (3) est relié au véhicule (1), à proximité de son extrémité inférieure (3b), par l'intermédiaire d'une suspension (7, 8) permettant d'effectuer des mouvements dans deux plans verticaux perpendiculaires l'un par rapport à l'autre, et prévoyant un dispositif de stabilisation à la verticale du mât télescopique (3) quelle que soit la position du véhicule (1), avec deux goniomètres (5, 6) placés à proximité de l'extrémité supérieure (3a) du mât télescopique (3) qui mesurent les différences d'angle se produisant sur deux plans verticaux perpendiculaires l'un par rapport à l'autre entre la direction du mât télescopique (3) et la verticale et qui transforment ces différences en signaux électriques et qui sont reliés par l'intermédiaire d'un circuit de réglage (9) à deux organes de réglage (10, 11) agissant dans ces plans verticaux sur l'extrémité inférieure (3c) du mât télescopique (3).

FIG.1

# FIG. 2

# FIG. 3